# EUROPEAN PATENT APPLICATION

(11) **EP 4 708 371 A1**
(43) Date of publication of application: **11.03.2026**
(21) Application number: 24854317.5
(22) Date of filing: 12.07.2024
(51) Int. Cl.: H01M 4/04, H05B 3/00, H05B 3/03

(54) **DEVICE FOR HEATING ELECTRODES**

(30) Priority: 11.08.2023 KR 20230105889
(71) Applicant: LG Energy Solution, Ltd., Seoul 07335 (KR)
(72) Inventor: KIM, Suk, Daejeon 34122 (KR); KIM, Tae-Woo, Daejeon 34122 (KR); KIM, Sung-Yong, Daejeon 34122 (KR); KIM, Ye-Hyeon, Daejeon 34122 (KR)
(74) Representative: Goddar, Heinz J.
(86) International application number: PCT/KR2024/009996
(87) International publication number: WO 2025/037765

(57) **Abstract**

A heating device for heating an electrode according to an embodiment of the present disclosure includes at least one heating lamp disposed to face the electrode; a heating chamber having an internal receiving space accommodating the heating lamp and configured to allow the electrode to pass through; and a control module configured to adjust the temperature of the electrode.

## Description

### TECHNICAL FIELD

The present disclosure relates to an electrode heating device.

The present application claims priority to Korean Patent Application No. 10-2023-0105889 filed on August 11, 2023 in the Republic of Korea, the disclosures of which are incorporated herein by reference.

### BACKGROUND ART

Secondary batteries having high applicability according to product groups and electrical characteristics such as high energy density are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to form a battery pack. Additionally, depending on the charging and discharging capacity required for the battery pack, a plurality of battery cells may be connected in parallel to form a battery pack. Thus, the number of battery cells included in the battery pack may be variously set according to the required output voltage and/or the demanded charging and discharging capacity.

Meanwhile, in manufacturing such secondary batteries, a process of hot rolling the electrode is required. In this case, in order to smoothly perform electrode rolling, it is necessary to heat the electrode in advance of the electrode rolling. This is called a pre heating process. Meanwhile, in the prior art, pre heating using a roll press was performed, at which time, due to the influence of the roll press, electrode temperature differences occurred depending on the equipment operation speed and electrode type, thereby causing a problem of formation of electrode wrinkles.

### DISCLOSURE

### Technical Problem

Therefore, an object of the present disclosure is to prevent wrinkles from forming on the electrode during the electrode heating process.

In another aspect, another object of the present disclosure is to heat the electrode to a constant temperature.

In still another aspect, still another object of the present disclosure is to reduce the nip pressure applied to the electrode during the pre heating process.

However, technical problems to be solved by the present disclosure are not limited to the above-described problems, and other problems not mentioned herein may be clearly understood by those skilled in the art from the following description of the present disclosure.

### Technical Solution

An electrode heating device for heating an electrode according to an embodiment of the present disclosure for solving the above-described problem includes at least one heating lamp disposed to face the electrode; a heating chamber having an internal receiving space accommodating the heating lamp and configured to allow the electrode to pass through; and a control module configured to adjust the temperature of the electrode.

Preferably, the heating lamp may be an infrared lamp.

In one aspect of the present disclosure, the heating lamp may be disposed in a state of being spaced apart from the electrode by a predetermined distance.

In another aspect of the present disclosure, the heating lamp may be provided in plurality along the travelling direction of the electrode.

In still another aspect of the present disclosure, the heating lamp may include at least one of an upper heating lamp disposed above the electrode; and a lower heating lamp disposed below the electrode.

In particular, the heating lamps may be disposed in opposite directions to each other with the electrode in between.

In one aspect of the present disclosure, the control module is configured to adjust the distance between the electrode and the heating lamps.

Preferably, the heating device may further include at least one pneumatic cylinder accommodated within the heating chamber; and a bracket connected to at least a portion of the pneumatic cylinder and having the heating lamps mounted thereon.

Here, the control module may control the operation of the pneumatic cylinder.

In this case, the control module may be configured to adjust the distance between the electrode and the heating lamp in a plurality of steps.

Furthermore, the control module may be configured to continuously adjust the distance between the electrode and the heating lamp.

In one aspect of the present disclosure, the heating device may further include an exhaust device provided in the heating chamber and configured to discharge the fluid inside the heating chamber to the outside of the heating chamber.

Preferably, the exhaust device may be a ring blower.

In another aspect of the present disclosure, the heating device may further include a temperature sensor configured to measure the temperature of the electrode.

In another aspect of the present disclosure, the control module may be configured to adjust the travelling speed of the electrode.

In still another aspect of the present disclosure, the control module may be configured to adjust the output of the heating lamp.

### Advantageous Effects

According to the present disclosure, it is possible to prevent wrinkles from forming on the electrode during the electrode heating process.

Additionally, according to the present disclosure, it is possible to heat the electrode to a constant temperature.

Additionally, according to the present disclosure, it is possible to reduce the nip pressure applied to the electrode during the pre heating process.

However, the effects to be obtained by the present disclosure are not limited to the above-described effects, and other technical effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a view for describing an electrode rolling process including a heating device according to an embodiment of the present disclosure.
FIG. 2 is a plan view of FIG. 1.
FIG. 3 is a view for describing a heating device according to an embodiment of the present disclosure.
FIG. 4 is a front view of FIG. 3.
FIG. 5 is a plan view of FIG. 3.
FIG. 6 is a view for describing a heating lamp included in the heating device of FIG. 3.
FIG. 7 is a view for describing the relation between a heating lamp included in the heating device of FIG. 3 and an electrode.
FIG. 8 is a view for describing the relation between a heating lamp included in the heating device of FIG. 3 and an electrode.

### BEST MODE

Hereinafter, preferred embodiments of the present disclosure will be described in detail with reference to the accompanying drawings. Prior to the description, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, to help understanding of the present disclosure, the accompanying drawings are not drawn to actual scale, but dimensions of some components may be exaggerated.

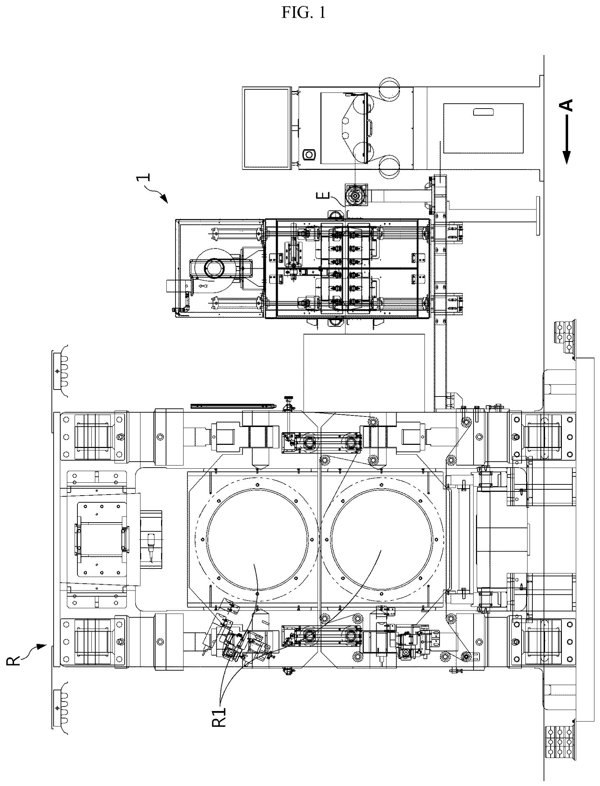

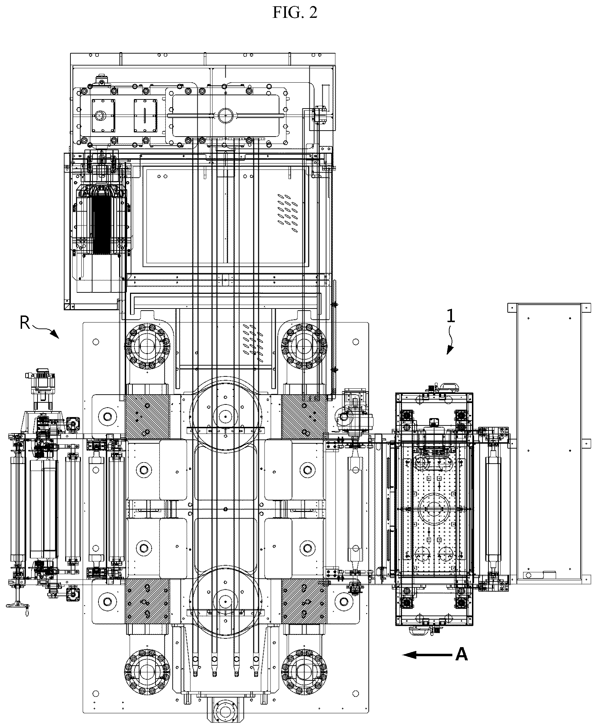

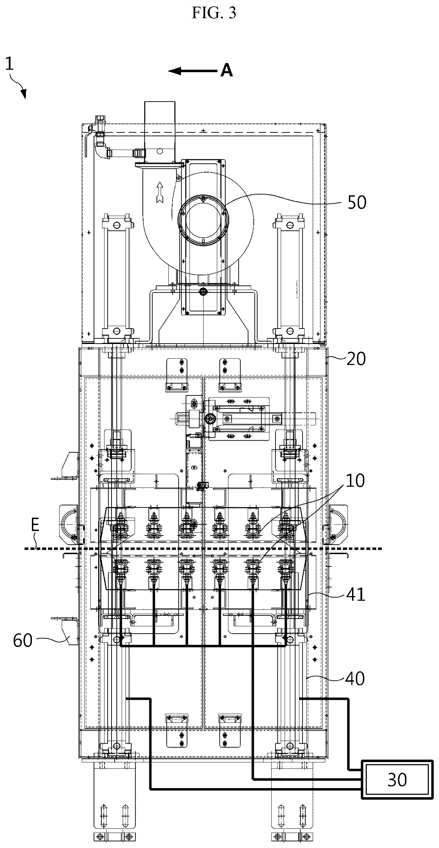

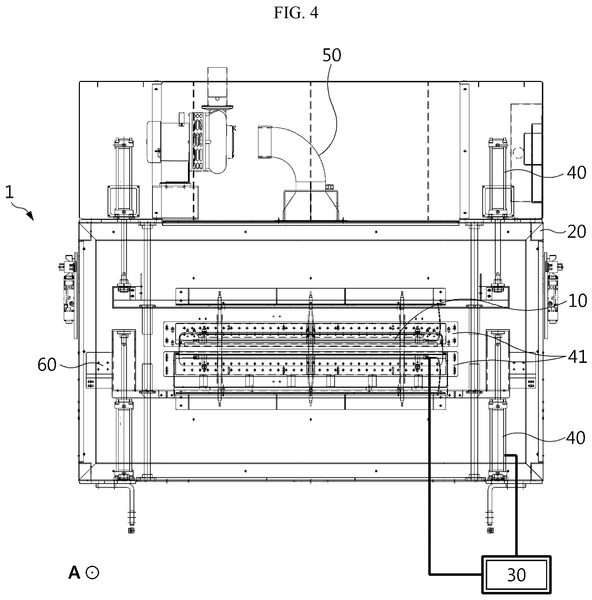

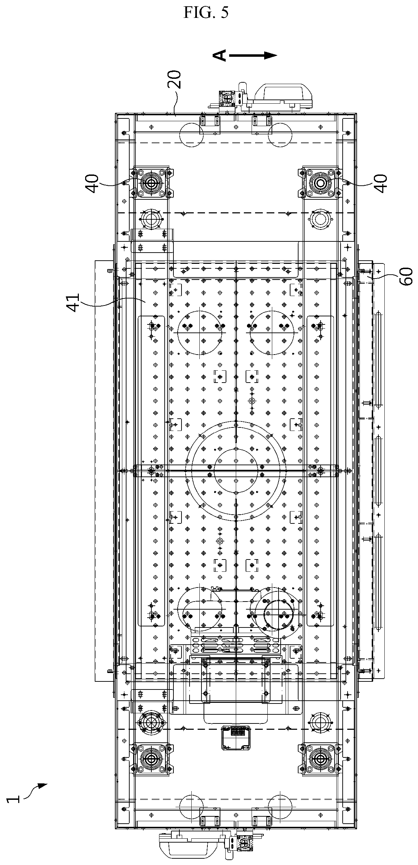

FIG. 1 is a view for describing an electrode E rolling process including a heating device 1 according to an embodiment of the present disclosure, and FIG. 2 is a plan view of FIG. 1. Meanwhile, FIG. 3 is a view for describing a heating device 1 according to an embodiment of the present disclosure. FIG. 4 is a front view of FIG. 3, and FIG. 5 is a plan view of FIG. 3.

Referring to FIGS. 1 to 5, the heating device 1 may include a heating lamp 10, a heating chamber 20, and a control module 30.

More specifically, the heating device 1 may be a heating device 1 for heating an electrode E. In this case, the electrode E may be an electrode E included in a secondary battery. For example, the electrode E may be an aluminum foil or a copper foil. The electrode E may go through a hot rolling process R during the manufacturing process of the electrode E. In the hot rolling process, the electrode is compressed under pressure upward and downward by a rolling roll R1. In this case, in order for the hot rolling to be smoothly performed even at a low pressure, it is necessary to heat the electrode E in advance of the hot rolling process. This is called a pre heating process. The heating device 1 of the present disclosure may be applied before the hot rolling process in this way.

Meanwhile, in the prior art, pre heating using a roll press was performed, at which time, due to the influence of the roll press, electrode temperature differences occurred depending on the equipment operation speed and electrode type, thereby causing a problem of formation of electrode wrinkles. The inventors of the present disclosure recognized such a problem and devised the present disclosure to solve the problem, and the specific components and effects will be described in detail below.

Referring to FIGS. 3 to 5, the heating lamp 10 may be disposed to face the electrode E.

In this case, one or more heating lamps 10 may be provided. For example, as shown in FIG. 3, the heating lamp 10 may be provided in plurality.

The heating chamber 20 may be configured to have an internal receiving space accommodating the heating lamp 10.

For example, referring to FIGS. 3 to 5, the heating chamber 20 may be a chamber having a roughly rectangular prism shape capable of accommodating a plurality of components in various ways.

Meanwhile, the heating chamber 20 may be configured to allow the electrode E to pass through. For example, when the surface perpendicular to the travelling direction A of the electrode E is referred to as a front surface and a rear surface, a slit configured to allow the electrode E to pass through may be provided on the front surface and the rear surface of the heating chamber 20. The electrode E may enter the heating chamber 20 through the slit. Additionally, the electrode E may exit the heating chamber 20 through the slit. Meanwhile, the heating chamber 20 may include an internal space capable of accommodating not only the heating lamp 10 but also other components.

The control module 30 may be configured to adjust the temperature of the electrode E.

For example, the control module 30 may control the temperature of the electrode E to be in a range from about room temperature to about 140°C or less. Preferably, the control module 30 may control the temperature of the electrode E to be in a range from about room temperature to about 110°C or less. When the temperature of the electrode E is controlled in such a temperature range, the rolling of the electrode E may be performed more smoothly in the hot rolling process R to be applied later. Additionally, it is possible to prevent wrinkles from forming on the electrode E.

In this way, the heating device 1 of the present disclosure includes at least one heating lamp 10, a heating chamber 20, and a control module 30, so that the temperature management of the electrode E may be efficiently made. Additionally, the number of times the electrode E passes through the roll may be reduced, thereby simplifying the process. Furthermore, the wrinkles formed on the electrode E may be reduced, thereby obtaining the effect of improving yield. Additionally, according to the above configuration, it is possible to reduce nip pressure applied to the electrode E during the pre heating process.

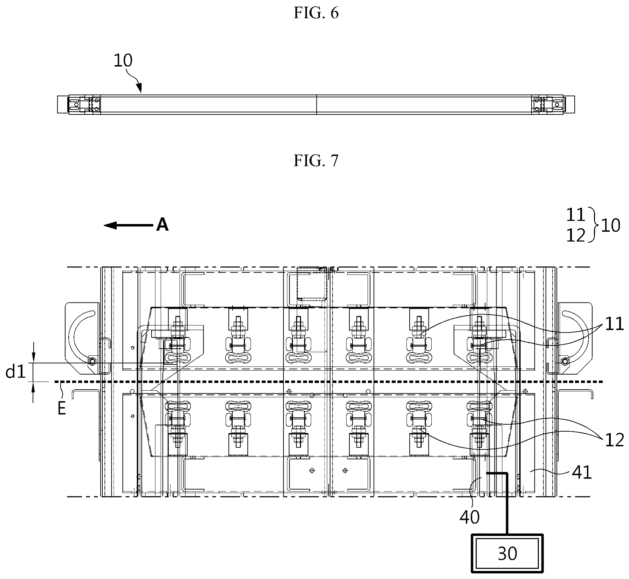

FIG. 6 is a view for describing a heating lamp 10 included in the heating device 1 of FIG. 3.

The heating lamp 10 may be a lamp having a roughly linear shape as shown in FIG. 6. When the heating lamp 10 has a roughly linear shape in this way, the heating lamp 10 may be disposed roughly perpendicular to the electrode travelling direction A, as can be seen in FIG. 4. Alternatively, the heating lamp 10 may be a lamp having a roughly bulb shape. When the heating lamp 10 has a roughly bulb shape in this way, the heating lamp 10 may be disposed at a predetermined interval on the bracket 41 to be described later. For example, the heating lamp 10 may be arranged in a roughly checkerboard pattern. According to this arrangement, the electrode E may be uniformly heated throughout.

The heating lamp 10 may be, for example, an infrared lamp. An infrared lamp may heat an object without direct contact with the object. Accordingly, according to the present disclosure, the object in contact with the electrode E during the pre heating process of the electrode E may be minimized. As a result, according to the present disclosure, it is possible to suppress the formation of electrode wrinkles during the pre heating process.

On the other hand, the case where the heating lamp 10 is an infrared lamp has been described herein as an example, but the type of the heating lamp 10 of the present disclosure is not necessarily limited to an infrared lamp, and any type of lamp capable of heating the electrode E without contacting the electrode E may be employed in the present disclosure.

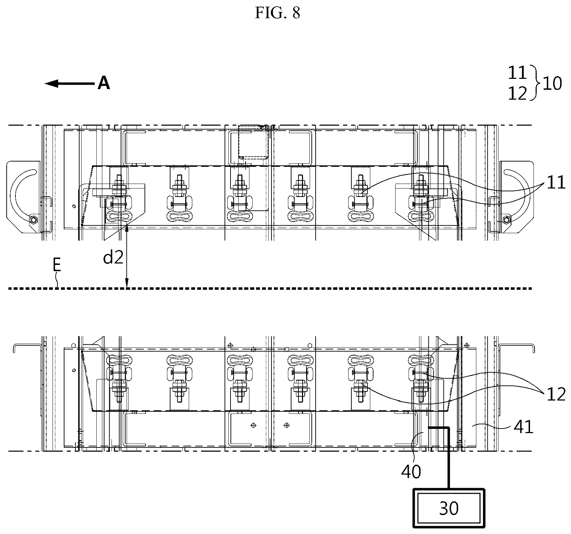

FIG. 7 is a view for describing the relation between a heating lamp 10 included in the heating device 1 of FIG. 3 and an electrode E, and FIG. 8 is a view for describing the relation between a heating lamp 10 included in the heating device 1 of FIG. 3 and an electrode E.

In one aspect of the present disclosure, the heating lamp 10 may be disposed in a state of being spaced apart from the electrode E by a predetermined distance. For example, referring to FIG. 7, the electrode E and the heating lamp 10 are spaced apart by d1. According to such a structure, the electrode E may be effectively heated without direct contact between the electrode E and the heating lamp 10. Accordingly, according to the present disclosure, the object in contact with the electrode E during the pre heating process of the electrode E may be minimized. As a result, it is possible to suppress the formation of electrode wrinkles during the pre heating process.

In another aspect of the present disclosure, the heating lamp 10 may be provided in plurality along the travelling direction A of the electrode E.

For example, referring to FIG. 7, the heating device 1 according to an embodiment of the present disclosure may include a plurality of heating lamps 10 along the travelling direction A of the electrode E. In the embodiment of FIG. 7, six heating lamps 10 are disposed at a predetermined interval along the travelling direction A of the electrode E. According to such a structure, effective heating of the electrode E is possible even within a short travelling distance range of the electrode E. That is, according to the above structure, the heating time during which the electrode E faces the heating lamp 10 may be prolonged. For example, a heating time of a certain level or more may be required for the electrode E to reach a desired temperature. However, the electrode E is continuously moving during the manufacturing process, and thus, if it stops at a certain point and continues to heat, the process efficiency may be lowered. Therefore, by disposing a plurality of heating lamps 10 along the electrode travelling direction A, it is possible to heat the electrode E to a predetermined temperature and furthermore to maintain the temperature of the heated electrode E.

Meanwhile, as an embodiment of the present disclosure, the plurality of heating lamps 10 may all be controlled to produce the same output. Alternatively, as another embodiment of the present disclosure, the plurality of heating lamps 10 may be controlled to produce different outputs. That is, the control module 30 of the present disclosure may independently control the temperatures of the plurality of heating lamps 10 so that the electrode E may be heated with profiles of various temperatures depending on the material or shape of the electrode E being heated.

In still another aspect of the present disclosure, the heating lamp 10 may include at least one of an upper heating lamp 11 disposed above the electrode E; and a lower heating lamp 12 disposed below the electrode E.

For example, only the upper heating lamp 11 may be provided, or only the lower heating lamp 12 may be provided. Alternatively, as shown in FIGS. 7 and 8, the upper heating lamp 11 and the lower heating lamp 12 may be provided at the same time. In this case, the heating lamps 10 may be disposed in opposite directions to each other with the electrode E in between. According to such a structure, since the upper surface of the electrode E and the lower surface of the electrode E may be heated at the same time, the electrode E may be heated so that the temperature thereof becomes uniform throughout.

In still another aspect of the present disclosure, the control module 30 may be configured to adjust the distance between the electrode E and the heating lamp 10.

For example, referring to FIG. 7, the distance between the electrode E and the heating lamp 10 may be d1, and referring to FIG. 8, the distance between the electrode E and the heating lamp 10 may be d2. That is, according to this embodiment, the distance between the electrode E and the heating lamp 10 may be adjustable to various values. According to such a configuration, the electrode E temperature may be adjusted in various ways by adjusting the distance between the electrode E and the heating lamp 10. For example, when the distance between the electrode E and the heating lamp 10 is d1 as in FIG. 7, and when the temperature of the electrode E is T1, the temperature T2 of the electrode E may be controlled to be lower than T1 if the distance between the electrode E and the heating lamp 10 is d2, which is greater than d1, as in FIG. 8.

Meanwhile, in order to configure the distance between the electrode E and the heating lamp 10 to be adjustable, the heating device 1 according to an embodiment of the present disclosure may further include at least one pneumatic cylinder 40 accommodated in the heating chamber 20; and a bracket 41 connected to at least a portion of the pneumatic cylinder 40 and having the heating lamps 10 mounted thereon. In this case, the control module 30 may control the operation of the pneumatic cylinder 40.

Referring to FIGS. 3, 5, 7 and 8, at least one heating lamp 10 may be mounted on the bracket 41. Preferably, the heating lamp 10 may be mounted in plurality on the bracket 41. In this case, at least one pneumatic cylinder 40 may be connected to the bracket 41. For example, in the embodiments of FIGS. 3, 5, 7 and 8, six upper heating lamps 11 are provided in the upper bracket 41, and six lower heating lamps 12 are provided in the lower bracket 41. Additionally, in the embodiments of FIGS. 3, 5, 7 and 8, one pneumatic cylinder 40 is provided at each of both ends of the upper bracket 41, so that a total of two pneumatic cylinders 40 are provided at the upper portion. Additionally, one pneumatic cylinder 40 is provided at each of both ends of the lower bracket 41, so that a total of two pneumatic cylinders 40 are provided at the lower portion. In this case, when the control module 30 withdraws the piston of the pneumatic cylinder 40 out of the cylinder, the bracket 41 attached and connected to the pneumatic cylinder 40 moves forward toward the electrode E. Therefore, the distance between the heating lamp 10 mounted on the bracket 41 and the electrode E may be narrowed. Accordingly, the temperature of the electrode E may be further increased. On the other hand, when the control module 30 inserts the piston of the pneumatic cylinder 40 into the cylinder, the bracket 41 attached and connected to the pneumatic cylinder 40 moves in a direction away from the electrode E. Therefore, the distance between the heating lamp 10 mounted on the bracket 41 and the electrode E may be widened. Accordingly, the temperature of the electrode E may be further decreased.

On the other hand, the pneumatic cylinder 40, as a component for adjusting the distance between the electrode E and the heating lamp 10, has been described herein as an example, but the scope of the present disclosure is not limited thereto, and any structure capable of adjusting the distance between one component and another component may be employed in the present disclosure.

Meanwhile, for convenience of illustration, the control module 30 is shown as being connected to the lower bracket 41 and the lower heating lamp 10 in FIG. 3, but the control module 30 is also connected to the upper bracket 41 and the upper heating lamp 10, so it is obvious that the upper components may also be controlled.

In still another aspect of the present disclosure, the control module 30 may be configured to adjust the distance between the electrode E and the heating lamp 10 in a plurality of steps.

For example, as shown in FIG. 7, the control module 30 may set the distance between the electrode E and the heating lamp 10 to d1, and as shown in FIG. 8, the control module 30 may also set the distance between the electrode E and the heating lamp 10 to d2. Alternatively, although not shown in the drawing, the distance between the electrode E and the heating lamp 10 may be configured in two or more steps. For example, the distance between the electrode E and the heating lamp 10 may be configured to be adjustable in ten steps. According to such a configuration, the heating device of the present disclosure may be applied to various cases where the heating conditions vary depending on the material or thickness of the electrode E. For example, when the material of the electrode E is a material having a relatively high heat capacity, the output delivered to the electrode E may be increased by adjusting the steps so that the distance between the heating lamp 10 and the electrode E is narrower. Alternatively, as another example, when the thickness of the electrode E is relatively thin, the output delivered to the electrode E may be decreased by adjusting the steps so that the distance between the heating lamp 10 and the electrode E is relatively farther away.

Furthermore, the control module 30 may be configured to continuously adjust the distance between the electrode E and the heating lamp 10. This embodiment may be particularly advantageous when the thickness of the electrode E is continuously changed.

In still another aspect of the present disclosure, the distance between the upper heating lamp 11 and the electrode E may be configured to be the same as the distance between the lower heating lamp 12 and the electrode E.

For example, referring to FIGS. 7 and 8, the distance between the upper heating lamp 11 and the electrode E is the same as the distance between the lower heating lamp 12 and the electrode E. On the other hand, although not shown in the drawing, the distance between the upper heating lamp 11 and the electrode E may be configured to be different from the distance between the lower heating lamp 12 and the electrode E. That is, as needed, in order to be applicable in various cases, the control module 30 may control the distance between the upper heating lamp 11 and the electrode E and the distance between the lower heating lamp 12 and the electrode E to be variable independently of each other.

In one aspect of the present disclosure, the heating device 1 may further include an exhaust device 50.

For example, referring to FIGS. 3 to 5, the exhaust device 50 may be provided in the heating chamber 20. Preferably, the exhaust device 50 may be provided within the heating chamber 20. For example, as shown in FIG. 3, the exhaust device 50 may be provided at the upper side of the space within the heating chamber 20.

The exhaust device 50 may be configured to discharge fluid within the heating chamber 20 to the outside of the heating chamber 20. Here, the fluid may include, for example, moisture generated by heating the electrode E. In this way, according to the structure of the present disclosure, the drying effect of the electrode E may also be obtained by discharging the moisture through the exhaust device 50.

Meanwhile, the exhaust device 50 may be, for example, a ring blower. A ring blower is an exhaust device that transfers a large amount of air, gas, steam, and the like at a low pressure.

On the other hand, a ring blower, as one embodiment of the exhaust device 50 of the present disclosure, has been described herein as an example, but the exhaust device 50 of the present disclosure is not limited to the ring blower, and any device capable of discharging the fluid within a heating chamber 20 to the outside of the heating chamber 20 may be included in the scope of the heating device 1 of the present disclosure.

In still another aspect of the present disclosure, the heating device 1 may further include a temperature sensor 60. The temperature sensor 60 may be electrically connected to the control module 30.

For example, referring to FIGS. 3 to 5, the heating device 1 may include the temperature sensor 60 on the exit side of the electrode E. That is, the temperature sensor 60 may measure the temperature of the electrode E when the electrode E is moved out of the heating chamber 20 after the electrode E is heated within the heating chamber 20. The measured temperature may be transmitted to the control module 30. According to the structure of the present disclosure provided with the temperature sensor 60 in this way, the temperature of the electrode E passing through the heating chamber 20 may be measured, and then the control module 30 may adjust the heating temperature according to the desired electrode E temperature.

In still another aspect of the present disclosure, the control module 30 may be configured to adjust the travelling speed of the electrode E.

For example, the control module 30 may be connected to a roller for driving the electrode E to adjust the rotation speed of the roller. In this way, the control module 30 may slow down the travelling speed of the electrode E, thereby increasing the time that the electrode E is in contact with the heating lamp 10. Accordingly, the temperature of the electrode E may be increased. Conversely, the control module 30 may raise the travelling speed of the electrode E, thereby reducing the time that the electrode E is in contact with the heating lamp 10. Accordingly, the temperature of the electrode E may be lowered.

Meanwhile, in still another aspect of the present disclosure, the control module 30 may be configured to adjust the output of the heating lamp 10.

For example, the control module 30 may be electrically connected to a power supply unit that supplies power to the heating lamp 10. That is, the control module 30 may adjust the amount of power supplied to the heating lamp 10. For example, the control module 30 may adjust the output of the heating lamp 10 between 0 and 100%. Therefore, the temperature of the electrode E may be easily adjusted only by adjusting the output of the heating lamp 10 without adjusting the distance between the heating lamp 10 and the electrode E or without adjusting the travelling speed of the electrode E.

In still another aspect of the present disclosure, the control module 30 may adjust the temperature of the electrode E through at least one of (a) adjusting the distance between the electrode E and the heating lamp 10; (b) adjusting the travelling speed of the electrode E; and (c) adjusting the output of the heating lamp 10. For example, it is possible to adjust the temperature of the electrode E only by adjusting the distance between the electrode E and the heating lamp 10, it is possible to adjust the temperature of the electrode E by adjusting the distance between the electrode E and the heating lamp 10 and simultaneously adjusting the travelling speed of the electrode E, and it is possible to adjust the temperature of the electrode E by adjusting the travelling speed of the electrode E and simultaneously adjusting the output of the heating lamp 10.

According to various embodiments as described above, it is possible to prevent wrinkles from forming on the electrode E during the electrode E heating process. Additionally, the electrode E may be heated to a constant temperature, and the nip pressure applied to the electrode E during the pre heating process may be reduced.

Meanwhile, the terms indicating directions as used herein such as upper and lower are used for convenience of description only, and it is obvious to those skilled in the art that the term may change depending on the position of the stated element or an observer.

The present disclosure has been described hereinabove with reference to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

## Claims

1. A heating device for heating an electrode, comprising:
at least one heating lamp disposed to face the electrode;
a heating chamber having an internal receiving space accommodating the heating lamp and configured to allow the electrode to pass through; and
a control module configured to adjust the temperature of the electrode.

2. The heating device according to claim 1,
wherein the heating lamp is an infrared lamp.

3. The heating device according to claim 1,
wherein the heating lamp is disposed in a state of being spaced apart from the electrode by a predetermined distance.

4. The heating device according to claim 1,
wherein the heating lamp is provided in plurality along the travelling direction of the electrode.

5. The heating device according to claim 1,
wherein the heating lamp comprises at least one of:
an upper heating lamp disposed above the electrode; and
a lower heating lamp disposed below the electrode.

6. The heating device according to claim 1,
wherein the heating lamps are disposed in opposite directions to each other with the electrode in between.

7. The heating device according to claim 1,
wherein the control module is configured to adjust the distance between the electrode and the heating lamps.

8. The heating device according to claim 1, further comprising:
at least one pneumatic cylinder accommodated within the heating chamber; and
a bracket connected to at least a portion of the pneumatic cylinder and having the heating lamps mounted thereon,
wherein the control module controls the operation of the pneumatic cylinder.

9. The heating device according to claim 1,
wherein the control module is configured to adjust the distance between the electrode and the heating lamp in a plurality of steps.

10. The heating device according to claim 1,
wherein the control module is configured to continuously adjust the distance between the electrode and the heating lamp.

11. The heating device according to claim 1, further comprising:
an exhaust device provided in the heating chamber and configured to discharge the fluid inside the heating chamber to the outside of the heating chamber.

12. The heating device according to claim 11,
wherein the exhaust device is a ring blower.

13. The heating device according to claim 1, further comprising:
a temperature sensor configured to measure the temperature of the electrode.

14. The heating device according to claim 1,
wherein the control module is configured to adjust the travelling speed of the electrode.

15. The heating device according to claim 1,
wherein the control module is configured to adjust the output of the heating lamp.
